# EUROPEAN PATENT SPECIFICATION

(11) **EP 3 031 340 B1**
(45) Date of publication and mention of the grant of the patent: **02.06.2021**
(21) Application number: 13891122.7
(22) Date of filing: 09.08.2013
(51) Int. Cl.: C08K 3/36, C08L 31/04, A43B 13/04, A43B 13/12, C08L 7/00, C08L 9/00, C08L 23/22

(54) **SOLE FOR SHOES, AND SHOES**
SOHLE FÜR SCHUHE UND SCHUHE
SEMELLE POUR CHAUSSURES, ET CHAUSSURES

(43) Date of publication of application: 15.06.2016
(73) Proprietor: ASICS Corporation, Kobe-shi, Hyogo 650-8555 (JP)
(72) Inventor: SAWADA, Daisuke, Kobe-shi, Hyogo 650-8555 (JP); KAMIMURA, Takuro, Kobe-shi, Hyogo 650-8555 (JP); HARANO, Kenichi, Kobe-shi, Hyogo 650-8555 (JP)
(74) Representative: Zimmermann & Partner Patentanwälte mbB
(86) International application number: PCT/JP2013/071661
(87) International publication number: WO 2015/019490

(56) References cited:
- EP-A1- 1 958 968
- EP-A1- 2 489 496
- WO-A1-2013/108378
- JP-A- S6 232 129
- JP-A- 2000 014 403
- JP-A- 2005 029 717
- JP-A- 2005 058 646
- JP-A- 2006 152 058

## Description

### TECHNICAL FIELD

The present invention relates to a shoe sole according to claim 1 suitable as a structural element of a shoe, and to a shoe using the same Preferred embodiments are disclosed in the appended dependent claims.

### BACKGROUND ART

Shoes are manufactured by attaching shoe soles, such as outsoles and midsoles, to an upper covering a top of a foot.

In general, soles made of rubber and of elastomer resins are widely used. Among these soles, shoe soles made of rubber are obtained by forming a rubber composition including a rubber component, a reinforcing agent, a vulcanization accelerator, and the like. As the reinforcing agent, silica is usually used (Patent Document 1).

Patent Document 2 discloses a foam sole for a shoe, wherein the foam sole comprises a rubber component and a resin component.

In recent years, waste materials (used resins) have been recycled for environmental protection and because of increased costs of materials. Such waste materials include, for example, wastes of products like shoes and sporting goods; remnants arising in manufacturing plants; and unnecessary materials generated for other reasons. Also in the field of manufacturing of shoes, there is a strong request for mixing such a waste material into the rubber composition as described above and producing a new sole for shoes.

Some of these waste materials may contain cross-linked resins. However, mixing of a cross-linked resin into the rubber composition causes a problem of reducing a mechanical strength of the resultant soles.

Furthermore, there is a need for providing suitable hardness for shoe soles from a viewpoint of a comfortableness during wearing the shoes.

[Patent Document 1] JP 2005-058646 A
[Patent Document 2] WO 2013/108378 A1

### SUMMARY OF THE INVENTION

An object of the present invention is to provide a shoe sole containing a cross-linked resin, wherein the shoe sole has a superior mechanical strength.

In order to achieve the object described above, the present inventors have made an extensive study on such materials that allow the use of a resin that has been subjected to cross-linking (hereinafter, referred to as a cross-linked resin) and at the same time, make it possible to improve the mechanical strength. In general, cross-linked resins, in which neighboring polymer molecules have been cross-linked, are difficult to melt, and it has been considered that even though a cross-linked resin is mixed into a rubber component, the improvement in its mechanical strength cannot be expected or if any, a slight improvement in its mechanical strength is achieved. On the contrary, the present inventors have found that the use of a cross-linked ethylene-vinyl acetate copolymer leads to a remarkable increase in the mechanical strength of a rubber composition, and based on this finding, have reached the completion of the present invention.

A shoe sole includes a rubber component containing: at least one of a natural rubber and an isoprene rubber; and a cross-linked resin, wherein the rubber component contains the at least one of the natural rubber and the isoprene rubber in an amount of not less than 70 parts by mass per 100 parts by mass of the rubber component, and the cross-linked resin is a cross-linked ethylene-vinyl acetate copolymer. Such the shoe sole may be used as an outsole for a shoe, for example.

A preferable shoe sole contains the cross-linked ethylene-vinyl acetate copolymer in an amount of 3 parts by mass to 40 parts by mass relative to 100 parts by mass of the rubber component.

A preferable shoe sole further contains silica in an amount of more than 0 parts by mass to not more than 40 parts by mass, preferably 10 parts by mass to 40 parts by mass, relative to 100 parts by mass of the rubber component.

In a preferable shoe sole, the rubber component is composed of the natural rubber alone, the isoprene rubber alone, or a mixture of the natural rubber and the isoprene rubber.

In a preferable shoe sole of the present invention, the cross-linked ethylene-vinyl acetate copolymer is a pulverized waste material.

According to another aspect of the present invention, a shoe is provided. The shoe includes any one of the shoe sole according to claims 1-7.

The shoe sole of the present invention, which has a cross-linked ethylene-vinyl acetate copolymer mixed therein, is relatively excellent in strength. Preferable shoe soles have suitable hardness, and thus the use of these shoe soles allows providing shoes that are superior in durability and in wearing comfortableness.

### BRIEF DESCRIPTION OF THE DRAWINGS

Fig. 1 is a side view illustrating one embodiment of the shoe according to the present invention.
Fig. 2 is an sectional view taken along the line II-II in Fig. 1.
Fig. 3 is a side view illustrating another embodiment of the shoe according to the present invention.
Fig. 4 is a graph showing a relationship between the composition and the breaking strength of Example 1.
Fig. 5 is a graph showing a relationship between the composition and the hardness of Example 1.
Fig. 6 is a graph showing a relationship between the composition and the breaking strength of Comparative Example 1.
Fig. 7 is a graph showing a relationship between the composition and the breaking strength of Comparative Example 2.
Fig. 8 is a graph showing a relationship between the composition and the breaking strength of Comparative Example 3.
Fig. 9 is a graph showing a relationship between the composition and the breaking strength of Comparative Example 4.
Fig. 10 is a graph showing a relationship between the composition and the breaking strength of Reference Examples.

### DETAILED DESCRIPTION OF THE EMBODIMENTS

Hereinafter, a shoe sole and a shoe of the present invention are described. In the present specification, the wording "PPP to QQQ" means that "PPP or more and QQQ or less".

### [Structure of shoe of present invention]

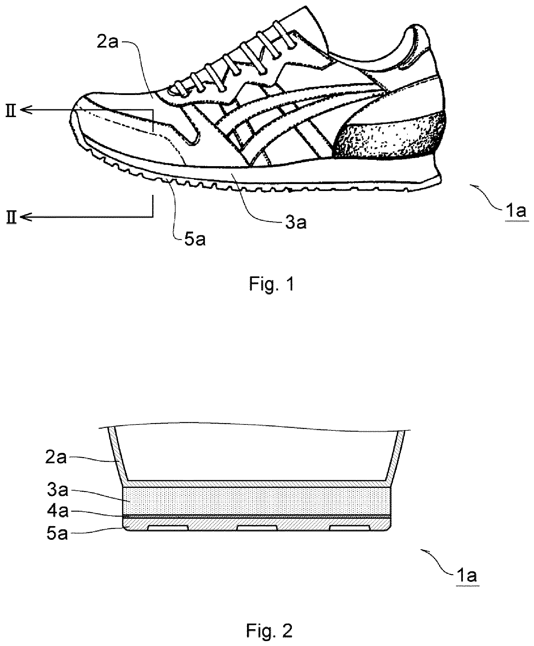

In Figs. 1 and 2, a shoe 1a has an upper 2a covering a top of a foot, a midsole 3a disposed beneath the upper 2a, and an outsole 5a disposed on the lower surface of the midsole 3a. The midsole 3a is attached onto the lower end of the upper 2a. The outsole 5a is attached across the lower surface of the midsole 3a. Methods for attaching the midsole 3a and the outsole 5a are not particularly limited, and typically include gluing using an adhesive 4a. In cases where the midsole 3a and the outsole 5a have the property of adhering to each other, it is also possible that they are directly adhered to each other. In addition, methods for attaching the upper 2a and the midsole 3a are not particularly limited, and include, for example, gluing using an adhesive. For the shoe 1a, the lower surface of the outsole 5a comes into contact with the ground.

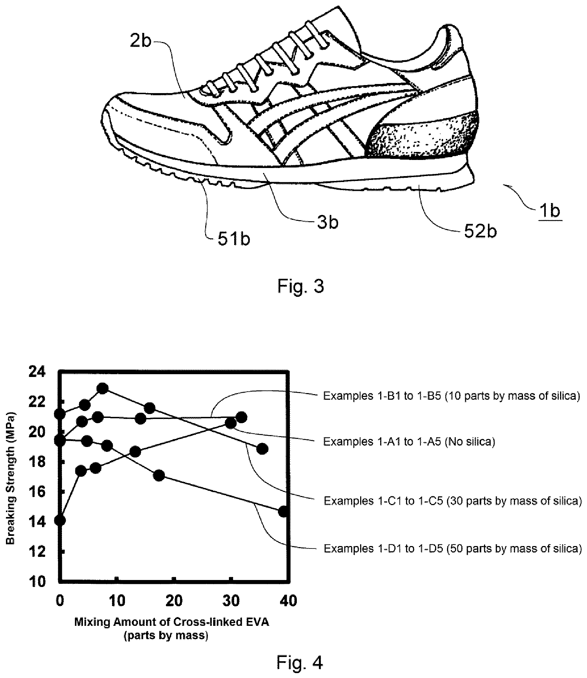

In Fig. 3, a shoe 1b has an upper 2b covering a top of a foot, a midsole 3b disposed beneath the upper 2b, and a first outsole 51b and a second outsole 52b disposed on the lower surface of the midsole 3b. In the case of this shoe 1b, the respective areas of the outsoles 51b and 52b are smaller than that of the lower surface of the midsole 3b. Therefore, there is exposed part of the lower surface of the midsole 3b. The exemplary shoe 1b illustrated in Fig. 3 is provided with two outsoles 51b and 52b, which each have an area smaller than that of the midsole 3b. For example, a shoe according to the present invention may be provided with a single outsole that has an area smaller than that of the midsole 3b, or with three or more outsoles that each have an area smaller than that of the midsole 3b (neither of these examples being illustrated in the drawings).

In Fig. 3, a first outsole 51b is attached in an anterior region of the lower surface of the midsole 3b, and a second outsole 52b is attached in a posterior region of the lower surface of the midsole 3b. Of course, the position of an outsole having a smaller area is not limited to an anterior or posterior region of the lower surface of the midsole 3b, and can be modified as appropriate. For the shoe 1b, the lower surface of the outsoles 51b and 52b and a part of the lower surface of the midsole 3b come into contact with the ground.

The respective lower surfaces of the outsoles 5a, 51b, and 52b are usually formed in a concave-convex shape as illustrated in Figs. 1 to 3. However, the shape of the lower surface of the outsole is not limited to such a concave-convex shape. All or at least one of the outsoles illustrated may have a lower surface formed in a flat shape (not illustrated). Also, all or at least one of the outsoles illustrated may have a lower surface dotted with a plurality of studs of a different structure (not illustrated).

The respective thicknesses of the outsoles 5a, 51b, and 52b are not particularly limited, and these outsoles are each formed so as to have a thickness of usually 1 mm or more, preferably 2 mm to 10 mm. The respective thicknesses of the midsoles 3a and 3b are also not particularly limited, and these midsoles are each formed so as to have a thickness of usually 3 mm or more, preferably 4 mm to 20 mm.

The above-mentioned outsole is a bottom element of a shoe that comes into contact with the ground, and can be appropriately used wholly or partially over the lower surface of the shoe, as described above. The outsole is not limited to a bottom element that comes into constant contact with the ground. The concept of the outsole also includes a bottom element that does not come into contact with the ground in normal cases and becomes deformed by external forces (such as an impact when the foot touches the ground) so that the bottom element may come into contact with ground. The bottom element that becomes deformed by such external forces so that it may come into contact with ground includes a reinforcing element such as a shank element and the like. The shank element is a bottom element that is disposed in a region corresponding to the arch of a foot.

A shoe sole of the present invention is used for the above-mentioned outsole. In cases of shoes having a plurality of outsoles, a shoe sole of the present invention can be used for some or all of the plurality of outsoles. A shoe sole not of the present invention can also be used for the above-mentioned midsole. A shoe sole of the present invention is used as an outsole, while a material that is not within the present invention may be used as a different structural element of a shoe including a midsole.

### [Shoe sole of the present invention]

A shoe sole of the present invention has a rubber component, a cross-linked resin, and optionally silica and additives. The present invention is characterized in that as the cross-linked resin, a cross-linked ethylene-vinyl acetate copolymer is employed. A shoe sole is obtained by forming a rubber composition into which these components are mixed in their respective required amounts.

A shoe sole may be either in a non-foaming form or in a foamed form. When a shoe sole is used as an outsole, the shoe sole is preferably in a non-foaming form.

### (Rubber component)

The rubber component contains at least one of a natural rubber and an isoprene rubber, and may contain another rubber as necessary, wherein the at least one of the natural rubber and the isoprene rubber is contained in an amount of not less than 70 parts by mass per 100 parts by mass of the rubber component.

Here, the natural rubber is a rubber containing isoprene as a major component, and the isoprene rubber is a synthetic rubber that is industrially manufactured. Both the natural rubber and the isoprene rubber contain a polymer of isoprene and are rubbers having substantially similar structures and physical properties, and thus may not need to be distinguished distinctly from each other. The natural rubber refers to an isoprene polymer obtained from trees, and the isoprene rubber refers to an isoprene polymer derived from petroleum. The respective weight-average molecular weights of the natural rubber and the isoprene rubber are not particularly limited, and are, for example, 100,000 to 1,000,000.

Another rubber refers to a rubber other than a natural rubber and an isoprene rubber. Another rubber is not particularly limited, and includes, for example, diene rubbers such as a butadiene rubber (BR) and a chloroprene rubber (CR); diene copolymer rubbers such as a styrene-butadiene rubber (SBR), a styrene-butadiene-styrene rubber (SBSR), an acrylonitrile-butadiene rubber (NBR), a styrene-isoprene copolymer (SIR), and a butyl rubber (IIR); non-diene rubbers such as an ethylene-α-olefin copolymer rubber containing ethylene units and units consisting of an α-olefin having three or more carbons, a urethane rubber, an acrylic rubber, and a silicone rubber. These copolymer rubbers may be block copolymers, or alternatively may be random copolymers. Another rubber as mentioned above can be used alone or in combination of two or more kinds.

The rubber component is composed of only at least one of a natural rubber and an isoprene rubber, or alternatively of at least any one of a natural rubber and an isoprene rubber, and another rubber.

When composed of only at least one of a natural rubber and an isoprene rubber, the rubber component is composed of any one of the followings: the natural rubber alone; the isoprene rubber alone; or a mixture of the natural rubber and the isoprene rubber. When composed of at least one of a natural rubber and an isoprene rubber, and another rubber, the rubber component is composed of any one of the followings: a mixture of the natural rubber and another rubber; a mixture of the isoprene rubber and another rubber; or a mixture of the natural rubber, the isoprene rubber and another rubber.

In the case where the rubber component contains both a natural rubber and an isoprene rubber, their mixing ratios are not particularly limited. By way of example, they are mixed at a ratio (by mass) of natural rubber : isoprene rubber of 1 : 99 to 99 : 1. Mixing of a natural rubber in relatively high amounts allows the construction of shoe soles that has a high percentage of a non-petroleum-derived component.

In the case where the rubber component is composed of at least any one of a natural rubber and an isoprene rubber, and another rubber, their mixing ratios are not particularly limited, with the proviso that the rubber component contains any one of the natural rubber and the isoprene rubber in an amount of not less than 70 parts by mass per 100 parts by mass of the rubber component. For example, the mixing ratio (by mass) of at least any one of the natural rubber and the isoprene rubber relative to another rubber is 70 : 30 to 100 : 0, preferably 75 : 25 to 100 : 0, more preferably 80 : 20 to 100 : 0, particularly preferably from 90 : 10 to 100 : 0.

Since the rubber component contains at least any one of a natural rubber and an isoprene rubber in an amount of not less than 70 parts by mass per 100 parts by mass of the rubber component, shoe soles can be obtained that are superior in mechanical strength.

### (Cross-linked ethylene-vinyl acetate copolymer)

The cross-linked resin serves as a reinforcing agent which mainly reinforces the rubber component.

The cross-linked resin contains a cross-linked ethylene-vinyl acetate copolymer. Hereinafter, a "cross-linked ethylene-vinyl acetate copolymer" is sometimes expressed to as a "cross-linked EVA."

An ethylene-vinyl acetate copolymers includes, for example, an ethylene-vinyl acetate copolymer (EVA) alone; a copolymer obtained by copolymerization using ethylene and vinyl acetate as the main components and additionally an aliphatic vinyl compound other than vinyl acetate, like a methacrylic ester such as 2-ethylhexyl acrylate or the like; a copolymer obtained by copolymerization using ethylene and vinyl acetate as the main components and additionally a monomer having a functional group such as acrylic acid or the like; a modified EVA which is modified by mixing an ethylene-vinyl acetate copolymer with one or more of a rosin, a hydrogenated rosin, a rosin ester derivative, a polymerized rosin, a terpene, a modified terpene resin, an aliphatic petroleum resin, and the like.

The ratio of copolymerization of vinyl acetate in the ethylene-vinyl acetate copolymer is not particularly limited, and is, for example, 10% by weight to 50% by weight. The molecular weight of the ethylene-vinyl acetate copolymer is not particularly limited, and, for example, its weight-average molecular weight is 10,000 to 1,000,000.

Methods for cross-linking the ethylene-vinyl acetate copolymer are not particularly limited, and include chemical cross-linking by which cross-linking is performed in the presence of a radical generating agent, silane cross-linking by which cross-linking is performed in the presence of a silane compound, radiation cross-linking, and the like.

It is possible to obtain shoe soles that are superior in mechanical strength even though an ethylene-vinyl acetate copolymer having a relatively high degree of cross-linking is used.

As the cross-linked EVA, a waste material may be employed, or a virgin material may be employed, or both of them may be employed in combination. The waste material used as the cross-linked EVA is a material that has undergone processing treatment such as forming of a virgin material of cross-linked EVA. The virgin material used as the cross-linked EVA is a cross-linked EVA that has not undergone processing treatment, such as forming. Waste materials of cross-linked EVA can be obtained from, for example, wastes of products like shoes and sporting goods; remnants arising in manufacturing plants; and unnecessary materials generated for other reasons.

From the viewpoint of recycling, it is preferable that a waste material of cross-linked EVA be employed as the cross-linked EVA.

When a waste material is used, it is preferable that the waste material be pulverized into particles of suitable size. The size of particles of the pulverized waste material (pulverized cross-linked EVA) is not particularly limited, and is preferably 1.0 mm or less in diameter, more preferably 0.5 mm or less in diameter.

A mixing amount of a cross-linked EVA is not particularly limited. However, when a cross-linked EVA is mixed in too small amounts, a sufficient improvement in the mechanical strength may not be achieved. From this point of view, the mixing amount of a cross-linked EVA is preferably 3 parts by mass or more, more preferably 3.5 parts by mass or more, relative to 100 parts by mass of the rubber component. On the other hand, when a cross-linked EVA is mixed in too much amounts, a decrease in the mechanical strength, to the contrary, may be caused. From this point of view, the mixing amount of a cross-linked EVA is preferably 40 parts by mass or less, more preferably 35 parts by mass or less, particularly preferably 30 parts by mass or less, most preferably 20 parts by mass or less, relative to 100 parts by mass of the rubber component.

### (Silica)

The silica serves as a reinforcing agent which mainly reinforces the rubber component along with the cross-linked resin.

As the silica, according to classification based on the method for production thereof, there are known dry silica obtained by burning silicon tetrachloride in a oxyhydrogen flame; wet silica obtained by neutralizing an alkali silicate with an acid; sol-gel process silica obtained by hydrolyzing an alkoxide of silicon in an acidic or alkaline water-containing organic solvent; colloidal silica obtained by electrodialysis of an aqueous alkali silicate solution; and the like. These kinds of silica may be used alone or in combination of two or more kinds. Especially, wet silica is easier in handling, relative to other types of silica, and thus is preferably used as the silica.

The average particle size of the silica is not particularly limited, and is, for example, 5 nm to 500 nm, preferably 10 nm to 200 nm, more preferably 20 nm to 100 nm. Silica having a particle diameter in these ranges is preferred because of providing an excellent reinforcing property. Silica having an average particle diameter in the above-mentioned range can be obtained by preparation methods well-known in the art. These preparation methods include, for example, dry pulverization methods in which a jet mill, a ball mill, or the like is used to produce silica particles having a desired average particle diameter, and wet pulverization methods in which a disperser, a homogenizer, or the like is used to produce silica particles having a desired average particle diameter.

The average particle diameter of silica particles as described above can be measured using a laser diffraction particle size analyzer (manufactured by Seishin Enterprise Co., Ltd. under the trade name of "SK Laser Micron Sizer LMS-2000e").

When the above-mentioned silica is mixed, its mixing amount is not particularly limited. However, when the above-mentioned silica is mixed in too small amounts, there is not found any significance of mixing the silica. From this point of view, when the silica is mixed, the mixing amount of silica is more than zero parts by mass, preferably 1 part or more by mass, more preferably 5 parts or more by mass, particularly preferably 10 parts or more by mass, relative to 100 parts by mass of the rubber component. On the other hand, when the above-mentioned silica is mixed in too much amounts, the hardness is increased, whereby soles may be yielded that are not suitable for the use for shoes. From this point of view, when the silica is mixed, the mixing amount of the silica is preferably 40 parts by mass or less, more preferably 30 parts by mass or less, particularly preferably 20 parts by mass or less, most preferably 15 parts by mass or less, relative to 100 parts by mass of the rubber component.

### (Additives)

As additives, examples include a softener, a cross-linker, a cross-linking aid, a filler, a weather-resisting agent, an antioxidant, a UV absorber, a lubricant, an antistatic agent, a dispersing agent, a foaming agent, and others. These are appropriately selected and mixed with the rubber component.

The softener has a function of improving the flexibility of shoe soles. Examples of the softener include a mineral oil such as process oil and extender oil; a vegetable oil such as tall oil fatty acid, castor oil, and linseed oil; and others. The use of a vegetable oil as the softener allows the construction of shoe soles having a large percentage of a non-petroleum-derived component. The mixing amount of the softener is not particularly limited, and is, for example, more than 0 parts by mass to 20 parts by mass or less, preferably 1 part by mass to 20 parts by mass, more preferably 3 parts by mass to 15 parts by mass. By mixing the softener, shoe soles having further superior flexibility can be obtained.

The cross-linker is mixed for cross-linking of the rubber component. Such a cross-linker is not particularly limited, and includes, for example, a sulfur-containing compound, an organic peroxide, and the like, with a sulfur-containing compound being particularly preferred. Examples of the compounds containing sulfur include sulfur, halogenated sulfur, di-2-benzothiazolyl disulfide, N-oxidiethylene-2-benzothiazolyl sulfeneamide, and the like. The mixing amount of the cross-linker is not particularly limited, and is, for example, 0.5 parts by mass to 10 parts by mass, preferably 0.5 parts by mass to 5 parts by mass, relative to 100 parts by mass of the rubber component.

The cross-linking aids are not particularly limited, and examples include zinc oxide, oxides of metals other than zinc, metal hydroxides, fatty acids, and the like. Examples of the oxides of metals other than zinc include magnesium oxide, lead monoxide, and the like. Examples of the metal hydroxides include calcium hydroxide and the like. Examples of the fatty acids include stearic acid, oleic acid, and the like. These kinds of cross-linking aids can be used alone or in combination of two or more kinds. The zinc oxide is preferably used as a cross-linking aid because the zinc oxide has excellent cross-linking promoting effect. The mixing amount of the cross-linking aid is not particularly limited, and is, for example, 1.0 part by mass to 10 parts by mass, preferably 1.5 parts by mass to 8 parts by mass, relative to 100 parts by mass of the rubber component.

The filler is not particularly limited, and includes, for example, calcium carbonate, magnesium carbonate, magnesium oxide, titanium oxide, and the like.

A shoe sole not of the present invention may also contain a resin component other than the cross-linked EVA. In cases where a resin other than the cross-linked EVA is contained, such a resin may be a thermoplastic resin and may be either cross-linked or non-cross-linked. Preferably, such a resin is a non-cross-linked thermoplastic resin.

### (Methods for manufacturing shoe soles)

A shoe sole not of the present invention is obtained by kneading a rubber composition in which the above-mentioned rubber component, cross-linked EVA, silica, and additives are mixed in their respective required amounts, and then forming the kneaded composition. The temperature during the kneading of the rubber composition is usually 140°C or lower, preferably 130°C or lower. Kneading of the rubber composition at too high temperatures may cause the initiation of the cross-linking of the rubber component. The kneading can be carried out using an open roll, a Banbury mixer, a kneader, a twin-screw extruder, or the like.

The forming of the rubber composition can be performed by placing it into a mold with an appropriate shape and then heating it. The heating of the rubber composition allows the cross-linking of the rubber component via the cross-linker, thereby yielding a shoe sole that has rubber elasticity. The temperature at which the rubber composition is subjected to forming is preferably 145°C to 200°C, more preferably 155°C to 180°C.

A shoe sole of the present invention, which contains a cross-linked EVA, exhibits a high mechanical strength and a superior durability. Furthermore, a shoe sole, which contains a required amount of a cross-linked EVA or required amounts of a cross-linked EVA and silica, has a high mechanical strength and in addition, a suitable hardness.

In general, in order to obtain shoes that have superior durability, the strength (breaking strength) of shoe soles is preferably 18 MPa or greater, more preferably 20 MPa or greater. In addition, in order to obtain shoes that have good grip performance, the hardness (Shore A hardness) of shoe soles is preferably from 40 to 65, more preferably from 40 to 60. According to the present invention, the production of shoe soles that have a hardness and strength as mentioned above can be achieved with relative ease.

Furthermore, use can also be made of a cross-linked EVA that has been disposed of as a waste material, and thus there can be provided shoe soles that are favorable to environmental protection.

In addition, it is possible to obtain shoe soles that have a relatively low specific gravity, and thus the use of these soles allows the production of relatively lightweight shoes.

### EXAMPLES

The present invention will be further described in detail below with reference to Examples and Comparative Examples, according to the appended claims. Here, the present invention is not limited to the following Examples, as long as they fall within the scope of the appended claims. The mixing ratios of the components in the tables are expressed in parts by mass.

### [Materials used]

(1) Isoprene rubber: manufactured by Nippon ZEON Co., Ltd. under the trade name of "Nipol 2200" and having a weight-average molecular weight of about 390,000.
(2) Butadiene rubber: manufactured by Nippon ZEON Co., Ltd. under the trade name of "Nipol 1220" and having a weight-average molecular weight of about 430,000.
(3) Silica (reinforcing agent): wet silica having an average particle diameter of 20 nm and manufactured by Evonik-Degussa under the trade name of "Ultrasil VN3."
(4) Cross-linked ethylene-vinyl acetate copolymer (cross-linked EVA): manufactured by Tosoh Corporation under the trade name of "Ultra Sen 630" and having a vinyl acetate content of 15%.
(5) Cross-linked olefin resin (hereinafter, referred to as cross-linked OF): manufactured by Mitsui Chemicals, Inc. under the trade name of "TAFMER DF810."
(6) Cross-linked styrene resin (hereinafter, referred to as cross-linked ST): manufactured by Asahi Kasei Chemicals Corp. under the trade name of "Tuftec H1041."
(7) Cross-linked urethane resin (hereinafter, referred to as cross-linked UT): commercialized product.
(8) Epoxy resin (hereinafter, referred to as cross-linked ER): manufactured by Konishi Co., Ltd. under the trade name of "Bond Quick Mender."
(9) Plasticizer: manufactured by JX Nippon Oil & Energy Corporation under the trade name of "JOMO Process P 200."
(10) Stearic acid: manufactured by New Japan Chemical Co., Ltd.
(11) Active zinc oxide: manufactured by The Honjo Chemical Corporation.
(12) Cross-linking aid: manufactured by API Corporation under the trade name of "Acting SL."
(13) Processing aid: polyethylene glycol, manufactured by NOF Corporation under the trade name of "PEG #4000."
(14) Antioxidant: manufactured by OUCHI SHINKO CHEMICAL INDUSTRIAL CO., LTD. under the trade name of "Nocrack 200 (BHT)."
(15) Cross-linker: sulfur, manufactured by Hosoi Chemical Industry Co., Ltd.
(16) Vulcanization accelerators: manufactured by OUCHI SHINKO CHEMICAL INDUSTRIAL CO., LTD. under the trade names of "Nocceler MSA-G" and "Nocceler BG", and used in combination.

### [Method for measuring hardness]

Hardness (Shore-A) was measured by the method in accordance with JIS K 6253, as indicated below.

A spring hardness tester type A was used to determine the hardness by putting a pressing surface of the tester into contact with a sample to be measured, which had a thickness of 6 mm or more, so that a pressing needle of the tester was placed to be perpendicular to the surface to be measured of the sample, and then pushing the pressing needle to the sample with a load of 9.81 N, followed by immediately reading the scale. The sample to be measured was prepared by stacking a plurality of test pieces formed in each of Examples and Comparative Examples described below, such that the sample had a thickness of 6 mm or more.

### [Method for measuring breaking strength (tensile strength)]

Breaking strength was measured by the method in accordance with JIS K 6251, as indicated below.

A tensile tester (manufactured by SHIMADZU CORPORATION under the trade name of Autograph AG-IS 50 kN) was used to determine the breaking strength. Each end of a test piece formed in each of Examples and Comparative Examples described below was held with a chuck of the tester, and was then subjected to pulling at a speed of 500 mm/min until the test piece was broken. The breaking strength of the test piece was calculated from a load upon breaking and a thickness of the test piece prior to pulling.

### [Method for measuring specific gravity]

Specific gravity was measured in accordance with JIS K 7311 at 23°C, using an electronic densitometer (manufactured by Alfa Mirage Co., Ltd. under the trade name of "MD-300S").

### [Example 1]

In Example 1, a mixing amount of cross-linked EVA and silica was changed as shown in Tables 1 and 2, to demonstrate how much effects rubber compositions had on the hardness and other properties of shoe soles produced using the rubber compositions.

Examples 1-A1 to 1-A5 were a group of rubber compositions in which no silica was mixed and the mixing ratio of the cross-linked EVA was changed.

Examples 1-B1 to 1-B5 were a group of rubber compositions in which 10 parts by mass of silica was mixed and the mixing ratio of the cross-linked EVA was changed.

Examples 1-C1 to 1-C5 were a group of rubber compositions in which 30 parts by mass of silica was mixed and the mixing ratio of the cross-linked EVA was changed.

Examples 1-D1 to 1-D5 were a group of rubber compositions in which 50 parts by mass of silica was mixed and the mixing ratio of the cross-linked EVA was changed.

In these Examples, the rubber compositions represented by Examples 1-A1, 1-B1, 1-C1, and 1-D1, which did not have the cross-linked EVA mixed therein, are essentially to be designated as Comparative Examples, but are designated as Examples because the designation of these compositions as Comparative Examples would make it difficult to understand their correspondence relationship.

The mixing ratios of the components of the rubber compositions produced in Example 1 are shown in Tables 1 and 2. In these Tables, the numerical values of the components are expressed in parts by mass. The "additives other than plasticizer" in these Tables includes 1.5 parts by mass of stearic acid, 5.0 parts by mass of active zinc oxide, 1.0 part by mass of cross-linking aid, 1.0 part by mass of processing aid, 1.0 part by mass of antioxidant, 2.0 parts by mass of cross-linker, and 3.0 parts by mass of vulcanization accelerator.

The cross-linked EVA was used which had been pulverized into particles and subjected to classification with a sieve having a mesh size of 500 µm.

Specifically, the isoprene rubber, silica (when mixed), plasticizer (when mixed), stearic acid, active zinc oxide, cross-linking aid, processing aid, and antioxidant at the mixing ratios indicated in Tables were kneaded using a kneader (Model DSS-10 MWB-E) under a discharging temperature condition of 130°C to 140°C. The resulting master batch was cooled, and then, the sulfur, vulcanization accelerators, and particulate cross-linked EVA were mixed with the master batch. The mixture was kneaded using an open roll. Subsequently, the kneaded material was pressed for a optimal period of time for vulcanization at 160°C and at a pressure of about 14.7 MPa using a press, so as to produce sheets with a length of 130 mm, a width of 210 mm, and a thickness of 2 mm. These sheets were cut in a dumbbell shape specified in JIS K 6251 to prepare a plurality of test pieces. The test pieces were used to measure the hardness, breaking strength, and specific gravity. These results are shown in Tables 1 and 2.

**[Table 1]**

| | | Example 1 | | | | | Example 1 | | | | |
|---|---|---|---|---|---|---|---|---|---|---|---|
| | | A1 | A2 | A3 | A4 | A5 | B1 | B2 | B3 | B4 | B5 |
| Compo -sition | Isoprene Rubber | 100.0 | | | | | 100.0 | | | | |
| | Cross-linked EVA | 0.0 | 3.7 | 6.3 | 13.3 | 30.0 | 0.0 | 3.9 | 6.7 | 14.2 | 31.9 |
| | Silica | - | | | | | 10.0 | | | | |
| | Plasticizer | - | | | | | 2.0 | | | | |
| | Additives other than plasticizer | 14.5 | | | | | 14.5 | | | | |
| Breaking Strength (MPa) | | 14.1 | 17.4 | 17.6 | 18.7 | 20.6 | 19.4 | 20.7 | 21.0 | 20.9 | 21.0 |
| Hardness | | 38 | 40 | 42 | 45 | 48 | 39 | 41 | 42 | 45 | 51 |
| Specific Gravity (g/cm³) | | 0.955 | 0.955 | 0.955 | 0.955 | 0.957 | 0.991 | 0.992 | 0.992 | 0.992 | 0.992 |

**[Table 2]**

| | | Example 1 | | | | | Example 1 | | | | |
|---|---|---|---|---|---|---|---|---|---|---|---|
| | | C1 | C2 | C3 | C4 | C5 | D1 | D2 | D3 | D4 | D5 |
| Compo -sition | Isoprene Rubber | 100.0 | | | | | 100.0 | | | | |
| | Cross-linked EVA | 0.0 | 4.4 | 7.5 | 15.8 | 35.5 | 0.0 | 4.8 | 8.3 | 17.4 | 39.2 |
| | Silica | 30 | | | | | 50.0 | | | | |
| | Plasticizer | 6.0 | | | | | 10.0 | | | | |
| | Additives other than plasticizer | 14.5 | | | | | 14.5 | | | | |
| Breaking Strength (MPa) | | 21.2 | 21.8 | 22.9 | 21.6 | 18.9 | 19.5 | 19.4 | 19.1 | 17.1 | 14.7 |
| Hardness | | 51 | 52 | 54 | 55 | 60 | 64 | 65 | 65 | 66 | 68 |
| Specific Gravity (g/cm³) | | 1.063 | 1.060 | 1.060 | 1.055 | 1.049 | 1.113 | 1.111 | 1.109 | 1.100 | 1.090 |

### [Comparative Example 1 to Comparative Example 4]

In Comparative Example 1, test pieces were prepared and measured for their hardness, breaking strength, and specific gravity as in Example 1, except that the cross-linked OF was used instead of the cross-linked EVA used in Example 1. These results are shown in Table 3.

In Comparative Example 2, test pieces were prepared and measured for their hardness, breaking strength, and specific gravity as in Example 1, except that the cross-linked ST was used instead of the cross-linked EVA used in Example 1. These results are shown in Table 4.

In Comparative Example 3, test pieces were prepared and measured for their hardness, breaking strength, and specific gravity as in Example 1, except that the cross-linked UT was used instead of the cross-linked EVA used in Example 1. These results are shown in Table 5. In Comparative Example 3, the corresponding rubber compositions in which the silica was mixed in an amount of 50 parts by mass were not produced.

In Comparative Example 4, test pieces were prepared and measured for their hardness, breaking strength, and specific gravity as in Example 1, except that the cross-linked ER was used instead of the cross-linked EVA used in Example 1. These results are shown in Table 6. In Comparative Example 4, the corresponding rubber compositions in which the silica was mixed in an amount of 50 parts by mass were not produced.

In Comparative Examples 1 to 4, test pieces corresponding to Examples 1-A2, 1-B2, 1-C2, and 1-D2 were not prepared because results were expected to be predictable.

In Tables 3 to 6, the entry "composition" includes only two components, cross-linked resin and silica; the components other than the cross-linked resin and silica were the same as in Example 1.

In addition, the composition and results for Comparative Examples 1-A1, 1-B1, 1-C1, and 1-D1; Comparative Examples 2-A1, 2-B1, 2-C1, and 2-D1; Comparative Examples 3-A1, 3-B1, 3-C1, and 3-D1; and Comparative Examples 4-A1, 4-B1, 4-C1, and 4-D1 are quite the same as those for Examples 1-A1, 1-B1, 1-C1, and 1-D1, respectively, and these Comparative Examples are also included in Tables 3 to 6, for the sake of making it easier to understand the correspondence relationship between each of these Comparative Examples and their corresponding Examples.

**[Table 3]**

| | | Comparative Example 1 | | | | Comparative Example 1 | | | |
|---|---|---|---|---|---|---|---|---|---|
| | | A1 | A3 | A4 | A5 | B1 | B3 | B4 | B5 |
| Compo -sition | Cross-linked OF | 0.0 | 6.3 | 13.3 | 30.0 | 0.0 | 6.7 | 14.2 | 31.9 |
| | Silica | - | | | | 10.0 | | | |
| Breaking Strength (MPa) | | 14.1 | 15.5 | 15.8 | 17.7 | 19.4 | 15.8 | 16.6 | 16.5 |
| Hardness | | 38 | 43 | 46 | 51 | 39 | 43 | 46 | 51 |
| Specific Gravity (g/cm³) | | 0.955 | 0.951 | 0.945 | 0.939 | 0.991 | 0.988 | 0.977 | 0.963 |

| | | Comparative Example 1 | | | | Comparative Example 1 | | | |
|---|---|---|---|---|---|---|---|---|---|
| | | C1 | C3 | C4 | C5 | D1 | D3 | D4 | D5 |
| Compo -sition | Cross-linked OF | 0.0 | 7.5 | 15.8 | 35.5 | 0.0 | 8.3 | 17.4 | 39.2 |
| | Silica | 30.0 | | | | 50.0 | | | |
| Breaking Strength (MPa) | | 21.2 | 16.3 | 16.8 | 13.4 | 19.5 | 18.2 | 16.9 | 13.5 |
| Hardness | | 51 | 56 | 57 | 59 | 64 | 68 | 71 | 74 |
| Specific Gravity (g/cm³) | | 1.063 | 1.055 | 1.044 | 1.005 | 1.113 | 1.110 | 1.099 | 1.075 |

**[Table 4]**

| | | Comparative Example 2 | | | | Comparative Example 2 | | | |
|---|---|---|---|---|---|---|---|---|---|
| | | A1 | A3 | A4 | A5 | B1 | B3 | B4 | B5 |
| Compo -sition | Cross-linked ST | 0.0 | 6.3 | 13.3 | 30.0 | 0.0 | 6.7 | 14.2 | 31.9 |
| | Silica | - | | | | 10.0 | | | |
| Breaking Strength (MPa) | | 14.1 | 14.5 | 16.9 | 16.6 | 19.4 | 16.4 | 16.5 | 16.4 |
| Hardness | | 38 | 43 | 45 | 50 | 39 | 43 | 45 | 50 |
| Specific Gravity (g/cm³) | | 0.955 | 0.951 | 0.946 | 0.944 | 0.991 | 0.990 | 0.987 | 0.973 |

| | | Comparative Example 2 | | | | Comparative Example 2 | | | |
|---|---|---|---|---|---|---|---|---|---|
| | | C1 | C3 | C4 | C5 | D1 | D3 | D4 | D5 |
| Compo -sition | Cross-linked ST | 0.0 | 7.5 | 15.8 | 35.5 | 0.0 | 8.3 | 17.4 | 39.2 |
| | Silica | 30.0 | | | | 50.0 | | | |
| Breaking Strength (MPa) | | 21.2 | 16.7 | 16.9 | 12.1 | 19.5 | 16.2 | 16.2 | 14.1 |
| Hardness | | 51 | 54 | 55 | 57 | 64 | 68 | 68 | 70 |
| Specific Gravity (g/cm³) | | 1.063 | 1.055 | 1.044 | 0.987 | 1.113 | 1.110 | 1.101 | 1.082 |

**[Table 5]**

| | | Comparative Example 3 | | | | Comparative Example 3 | | | |
|---|---|---|---|---|---|---|---|---|---|
| | | A1 | A3 | A4 | A5 | B1 | B3 | B4 | B5 |
| Compo -sition | Cross-linked UT | 0.0 | 6.3 | 13.3 | 30.0 | 0.0 | 6.7 | 14.2 | 31.9 |
| | Silica | - | | | | 10.0 | | | |
| Breaking Strength (MPa) | | 14.1 | 10.7 | 8.0 | 4.7 | 19.4 | 12.0 | 8.9 | 5.4 |
| Hardness | | 38 | 42 | 45 | 52 | 39 | 42 | 45 | 53 |
| Specific Gravity (g/cm³) | | 0.955 | 0.960 | 0.968 | 0.984 | 0.991 | 1.000 | 1.005 | 1.012 |

| | | Comparative Example 3 | | | | | | | |
|---|---|---|---|---|---|---|---|---|---|
| | | C1 | C3 | C4 | C5 | | | | |
| Compo -sition | Cross-linked UT | 0.0 | 7.5 | 15.8 | 35.5 | | | | |
| | Silica | 30.0 | | | | | | | |
| Breaking Strength (MPa) | | 21.2 | 13.1 | 9.5 | 5.6 | | | | |
| Hardness | | 51 | 55 | 58 | 68 | | | | |
| Specific Gravity (g/cm³) | | 1.063 | 1.070 | 1.078 | 1.091 | | | | |

**[Table 6]**

| | | Comparative Example 4 | | | | Comparative Example 4 | | | |
|---|---|---|---|---|---|---|---|---|---|
| | | A1 | A3 | A4 | A5 | B1 | B3 | B4 | B5 |
| Compo -sition | Cross-linked ER | 0.0 | 6.3 | 13.3 | 30.0 | 0.0 | 6.7 | 14.2 | 31.9 |
| | Silica | - | | | | 10.0 | | | |
| Breaking Strength (MPa) | | 14.1 | 9.7 | 6.4 | 4.5 | 19.4 | 11.0 | 8.2 | 4.9 |
| Hardness | | 38 | 40 | 40 | 40 | 39 | 40 | 40 | 40 |
| Specific Gravity (g/cm³) | | 0.955 | 0.972 | 0.992 | 1.030 | 0.991 | 1.015 | 1.033 | 1.062 |

| | | Comparative Example 4 | | | | | | | |
|---|---|---|---|---|---|---|---|---|---|
| | | C1 | C3 | C4 | C5 | | | | |
| Compo -sition | Cross-linked ER | 0.0 | 7.5 | 15.8 | 35.5 | | | | |
| | Silica | 30.0 | | | | | | | |
| Breaking Strength (MPa) | | 21.2 | 14.0 | 11.1 | 5.8 | | | | |
| Hardness | | 51 | 52 | 53 | 55 | | | | |
| Specific Gravity (g/cm³) | | 1.063 | 1.078 | 1.090 | 1.122 | | | | |

### [Assessment based on the difference in the cross-linked resins]

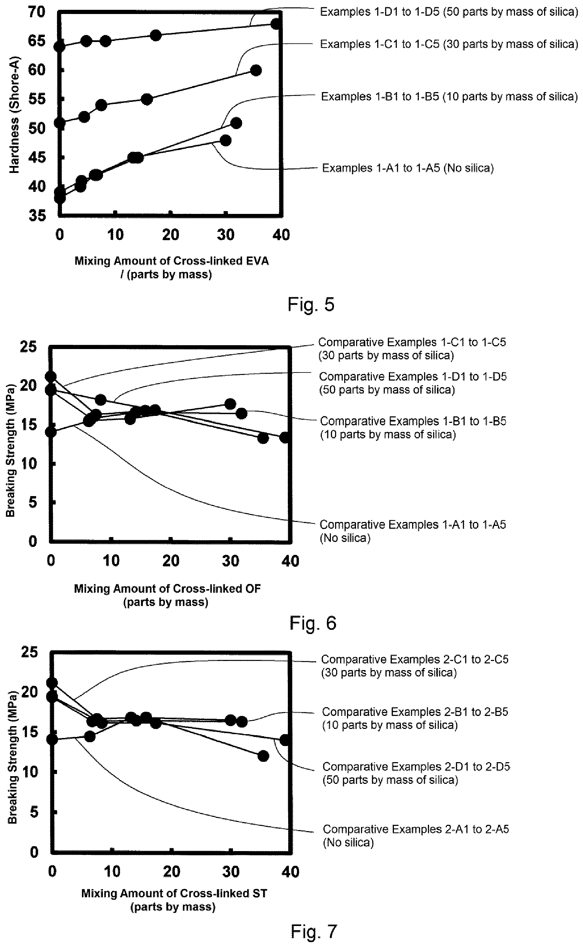

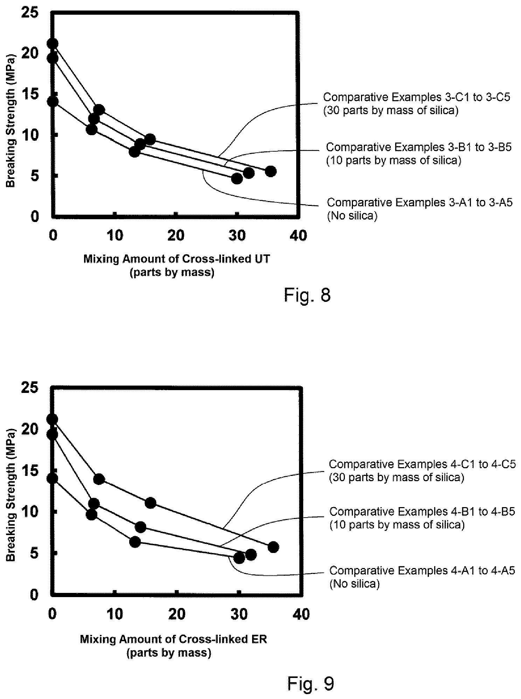

Fig. 4 depicts a graph showing the relationship between the composition and the breaking strength of Example 1. Fig. 5 depicts a graph showing the relationship between the composition and the hardness of Example 1. Figs. 6 to 9 depict a graph showing the relationship between the composition and the breaking strength of Comparative Examples 1 to 4, respectively.

With reference to Tables and Figures, the comparison of Example 1 with Comparative Examples 1 to 4 reveals that Example 1 with the cross-linked EVA mixed therein exhibits a relatively higher breaking strength than Comparative Examples 1 to 4, in which a cross-linked resin other than the cross-linked EVA was mixed. In particular, in Example 1, Examples 1-A2 to 1-A5 with no silica mixed therein resulted in a great improvement in the breaking strength in proportion to the mixed amount of the cross-linked EVA. On the other hand, in Comparative Examples 1 and 2, Comparative Examples 1-A2 to 1-A5 and Comparative Examples 2-A1 to 2-A5 with no silica mixed therein are found to exhibit a slight improvement in the breaking strength with a very small rate of increase and low numerical values of the breaking strength itself.

From these observations, it turns out that mixing of cross-linked EVA allows the production of shoe soles that have a significantly high breaking strength. It is not definitively known why the mixing of cross-linked EVA leads to an improvement in the breaking strength, but the present inventors infer that it is because the cross-linked EVA and the rubber component have good compatibility due to various factors such as polarity.

In general, it is known that mixing of silica results in an improvement in the breaking strength. In Comparative Examples 1 to 4, however, the shoe soles having the silica mixed therein showed a tendency that the breaking strength roughly decreased as the mixed amount of the cross-linked resin was increased.

On the other hand, in Example 1, test pieces in which 10 parts by mass to 30 parts by mass of the silica was mixed to the cross-linked EVA improved the breaking strength, as compared with the test pieces in which the cross-linked EVA was not mixed and only the silica was mixed. From these observations, it turns out that the use of a cross-linked EVA and silica in combination allows a greater improvement in the breaking strength. In particular, Examples 1-B2 to 1-B5 improved the breaking strength, relative to Example 1-B1 having only the silica mixed therein; the shoe soles from Examples 1-C2 to 1-C4 improved the breaking strength, relative to those from Example 1-C1 having only the silica mixed therein. From these observations, it is supposed that when silica is mixed in an amount of more than 0 parts by mass and not more than 15 parts by mass, the breaking strength will be improved in proportion to the mixed amount of cross-linked EVA. It is also supposed that when silica is mixed in an amount of more than 15 parts by mass and not more than 40 parts by mass, preferably in an amount of more than 15 parts by mass and not more than 30 parts by mass, the breaking strength will be improved by mixing 3 parts by mass to 20 parts by mass of a cross-linked EVA. It was an extraordinary effect which the present inventors had been not expected that the breaking strength was improved when both the silica and the cross-linked EVA were mixed.

In Example 1, test pieces having 50 parts by mass of the silica mixed therein had a reduced breaking strength. It is assumed that the reason for this would be because mixing of the silica in a large amount leads to an excessive rise in the breaking strength of the rubber component itself, thereby accelerating cracking at an interface between the rubber component and the cross-linked EVA, rather than increasing the strength by mixing of the cross-linked EVA.

In general, it is also known that the hardness increases in proportion to the mixed amount of silica. This is apparent from the hardness values of Example 1 and Comparative Examples 1 to 4. Regarding Example 1, the test pieces in which the silica was not mixed and the cross-linked EVA was mixed and in which 10 parts by mass to 30 parts by mass of the silica was mixed and the cross-linked EVA was mixed exhibited hardness in the range of approximately 40 to 60. Based on these results, when silica is mixed, its amount is preferably not more than 40 parts by mass.

### [Reference Examples]

In Reference Examples, test pieces were prepared and measured for their breaking strength as in Example 1, except that the carbon black was used instead of the silica used in Example 1. These results are shown in Table 7.

In these Reference Examples, test pieces corresponding to Examples 1-B2, 1-C2, and 1-D2 were not prepared because results were expected to be predictable.

**[Table 7]**

| | | Reference Example | | | | Reference Example | | | |
|---|---|---|---|---|---|---|---|---|---|
| | | B1 | B3 | B4 | B5 | C1 | C3 | C4 | C5 |
| Compo -sition | Isoprene Rubber | 100.0 | | | | 100.0 | | | |
| | Cross-linked EVA | 0.0 | 6.7 | 14.2 | 31.9 | 0.0 | 7.5 | 15.8 | 35.5 |
| | Carbon Black | 10.0 | | | | 30.0 | | | |
| | Plasticizer | 2.0 | | | | 6.0 | | | |
| | Additives other than plasticizer | 14.5 | | | | 14.5 | | | |
| Breaking Strength (MPa) | | 23.1 | 22.1 | 21.9 | 21.6 | 23.6 | 22.8 | 22.4 | 21.2 |

| | | Reference Example | | | | | | | |
|---|---|---|---|---|---|---|---|---|---|
| | | D1 | D3 | D4 | D5 | | | | |
| Compo -sition | Isoprene Rubber | 100.0 | | | | | | | |
| | Cross-linked EVA | 0.0 | 8.3 | 17.4 | 39.2 | | | | |
| | Carbon Black | 50.0 | | | | | | | |
| | Plasticizer | 10.0 | | | | | | | |
| | Additives other than plasticizer | 14.5 | | | | | | | |
| Breaking Strength (MPa) | | 22.4 | 22.2 | 21.7 | 20.7 | | | | |

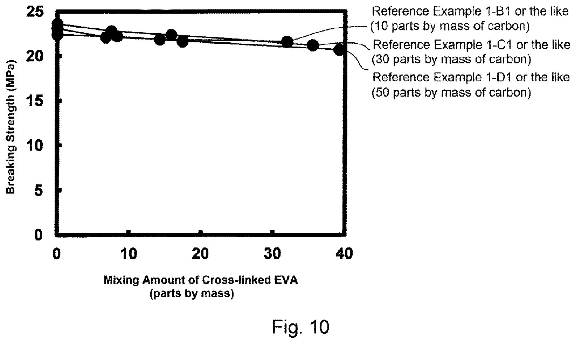

Fig. 10 depicts a graph showing the relationship between the composition and the breaking strength of Reference Examples.

Reference Examples B3 to B5, C3 to C5, and D3 to D5, in which the carbon black was mixed to the cross-linked EVA, exhibited reduced strength, relative to Reference Examples B1, C1, and D1, in which only the carbon black was mixed. From these observations, it turns out that silica is preferable in the combination with cross-linked EVA in order to improve the strength.

Furthermore, various designs are requested for shoe soles. Since rubber compositions having carbon black mixed therein become black in color, such compositions are limited in the range of applications when used as shoe soles. Compositions having silica mixed therein, on the other hand, can be colored in various colors and have a wide range of applications in terms of design, and thus compositions having silica mixed therein is preferable.

### [Example 2]

In Example 2, test pieces were prepared and measured for their hardness, breaking strength, and specific gravity in a similar way as in Example 1, except that a mixture of the isoprene rubber and the butadiene rubber (the ratio (by mass) of isoprene rubber and butadiene rubber = 3 : 1) was used instead of the isoprene rubber used in Example 1. These results are shown in Table 8.

### [Comparative Example 5]

In Comparative Example 5, test pieces were prepared and measured for their hardness, breaking strength, and specific gravity in a similar way as in Example 1, except that a mixture of the isoprene rubber and the butadiene rubber (the ratio (by mass) of isoprene rubber and butadiene rubber = 1 : 1) was used instead of the isoprene rubber used in Example 1. These results are shown in Table 9.

### [Comparative Example 6]

In Comparative Example 6, test pieces were prepared and measured for their hardness, breaking strength, and specific gravity in a similar way as in Example 1, except that a mixture of the isoprene rubber and the butadiene rubber (the ratio (by mass) of isoprene rubber and butadiene rubber = 1 : 3) was used instead of the isoprene rubber used in Example 1. These results are shown in Table 10.

In Example 2, Comparative Example 5, and Comparative Example 6, test pieces corresponding to Examples 1-A2, 1-B2 and 1-C2 were not prepared because results were expected to be predictable.

**[Table 8]**

| | | Example 2 | | | | Example 2 | | | |
|---|---|---|---|---|---|---|---|---|---|
| | | A1 | A3 | A4 | A5 | B1 | B3 | B4 | B5 |
| Compo -sition | Isoprene Rubber | 75.0 | | | | 75.0 | | | |
| | Butadiene Rubber | 25.0 | | | | 25.0 | | | |
| | Cross-linked EVA | 0.0 | 6.3 | 13.3 | 30.0 | 0.0 | 6.7 | 14.2 | 31.9 |
| | Silica | - | | | | 10.0 | | | |
| | Plasticizer | - | | | | 2.0 | | | |
| | Additives other than plasticizer | 14.5 | | | | 14.5 | | | |
| Breaking Strength (MPa) | | 2.7 | 4.8 | 8.1 | 10.9 | 13.5 | 11.8 | 15.0 | 15.0 |
| Hardness | | 44 | 47 | 50 | 56 | 45 | 48 | 51 | 57 |
| Specific Gravity (g/cm³) | | 0.957 | 0.958 | 0.961 | 0.963 | 0.994 | 0.998 | 0.999 | 0.993 |

| | | Example 2 | | | | | | | |
|---|---|---|---|---|---|---|---|---|---|
| | | C1 | C3 | C4 | C5 | | | | |
| Compo -sition | Isoprene Rubber | 75.0 | | | | | | | |
| | Butadiene Rubber | 25.0 | | | | | | | |
| | Cross-linked EVA | 0.0 | 7.5 | 15.8 | 35.5 | | | | |
| | Silica | 30.0 | | | | | | | |
| | Plasticizer | 6.0 | | | | | | | |
| | Additives other than plasticizer | 14.5 | | | | | | | |
| Breaking Strength (MPa) | | 17.1 | 17.4 | 17.5 | 16.9 | | | | |
| Hardness | | 54 | 57 | 61 | 66 | | | | |
| Specific Gravity (g/cm³) | | 1.066 | 1.060 | 1.055 | 1.047 | | | | |

**[Table 9]**

| | | Comparative Example 5 | | | | Comparative Example 5 | | | |
|---|---|---|---|---|---|---|---|---|---|
| | | A1 | A3 | A4 | A5 | B1 | B3 | B4 | B5 |
| Compo -sition | Isoprene Rubber | 50.0 | | | | 50.0 | | | |
| | Butadiene Rubber | 50.0 | | | | 50.0 | | | |
| | Cross-linked EVA | 0.0 | 6.3 | 13.3 | 30.0 | 0.0 | 6.7 | 14.2 | 31.9 |
| | Silica | | | | | 10.0 | | | |
| | Plasticizer | - | | | | 2.0 | | | |
| | Additives other than plasticizer | 14.5 | | | | 14.5 | | | |
| Breaking Strength (MPa) | | 2.2 | 2.5 | 3.6 | 3.7 | 4.1 | 4.5 | 5.8 | 8.0 |
| Hardness | | 47 | 50 | 53 | 58 | 48 | 51 | 54 | 59 |
| Specific Gravity (g/cm³) | | 0.957 | 0.957 | 0.959 | 0.962 | 0.999 | 0.995 | 0.995 | 0.993 |

| | | Co mparative Example 5 | | | | | | | |
|---|---|---|---|---|---|---|---|---|---|
| | | C1 | C3 | C4 | C5 | | | | |
| Compo -sition | Isoprene Rubber | 50.0 | | | | | | | |
| | Butadiene Rubber | 50.0 | | | | | | | |
| | Cross-linked EVA | 0.0 | 7.5 | 15.8 | 35.5 | | | | |
| | Silica | 30.0 | | | | | | | |
| | Plasticizer | 6.0 | | | | | | | |
| | Additives other than plasticizer | 14.5 | | | | | | | |
| Breaking Strength (MPa) | | 9.1 | 10.5 | 11.1 | 11.7 | | | | |
| Hardness | | 58 | 59 | 61 | 66 | | | | |
| Specific Gravity (g/cm³) | | 1.067 | 1.064 | 1.057 | 1.051 | | | | |

**[Table 10]**

| | | Comparative Example 6 | | | | Comparative Example 6 | | | |
|---|---|---|---|---|---|---|---|---|---|
| | | A1 | A3 | A4 | A5 | B1 | B3 | B4 | B5 |
| Compo -sition | Isoprene Rubber | 25.0 | | | | 25 .0 | | | |
| | Butadiene Rubber | 75.0 | | | | 75 .0 | | | |
| | Cross-linked EVA | 0.0 | 6.3 | 13.3 | 30.0 | 0.0 | 6.7 | 14.2 | 31.9 |
| | Silica | - | | | | 10 .0 | | | |
| | Plasticizer | - | | | | 2.0 | | | |
| | Additives other than plasticizer | 14.5 | | | | 14.5 | | | |
| Breaking Strength (MPa) | | 1.8 | 2.1 | 2.4 | 3.1 | 2.3 | 2.8 | 3.1 | 4.4 |
| Hardness | | 49 | 51 | 55 | 60 | 51 | 53 | 56 | 62 |
| Specific Gravity (g/cm³) | | 0.955 | 0.957 | 0.960 | 0.962 | 0.998 | 0.997 | 0.997 | 0.994 |

| | | Co mparative Example 6 | | | | | | | |
|---|---|---|---|---|---|---|---|---|---|
| | | C1 | C3 | C4 | C5 | | | | |
| Compo -sition | Isoprene Rubber | 25.0 | | | | | | | |
| | Butadiene Rubber | 75.0 | | | | | | | |
| | Cross-linked EVA | 0.0 | 7.5 | 15.8 | 35.5 | | | | |
| | Silica | 30.0 | | | | | | | |
| | Plasticizer | 6.0 | | | | | | | |
| | Additives other than plasticizer | 14.5 | | | | | | | |
| Breaking Strength (MPa) | | 4.6 | 5.0 | 6.6 | 8.0 | | | | |
| Hardness | | 60 | 62 | 65 | 70 | | | | |
| Specific Gravity (g/cm³) | | 1.065 | 1.060 | 1.056 | 1.049 | | | | |

From the results obtained from Examples 1 and 2 and Comparative Examples 5 and 6, it turns out that the strength increases in proportion to the ratio of the isoprene rubber in the rubber component. When comparing the results of Examples 2-A1 to 2-A5 with those of Comparative Examples 5-A1 to 5-A5 and 6-A1 to 6-A5, it also turns out that Example 2 having 75 parts by mass of the isoprene rubber mixed therein achieves a remarkable improvement in the strength by mixing the cross-linked EVA. Based on these findings, the rubber component may be a mixture of an isoprene rubber and another rubber. In such cases, it is considered that shoe soles having superior strength can be obtained by containing an isoprene rubber in an amount of not less than approximately 70 parts by mass per 100 parts by mass of the rubber component.

A shoe sole can be used as a structural element of various shoes.

1a, 1b Shoe
2a, 2b Upper of shoe
3a, 3b Midsole of shoe
5a, 51b, 52b Outsole of shoe

## Claims

1. A shoe sole (5a, 51b, 52b) comprising:
a rubber component containing at least one of a natural rubber and an isoprene rubber; and
a cross-linked resin,
wherein the rubber component contains the at least one of the natural rubber and the isoprene rubber in an amount of not less than 70 parts by mass per 100 parts by mass of the rubber component, and
the cross-linked resin is a cross-linked ethylene-vinyl acetate copolymer.

2. The shoe sole (5a, 51b, 52b) according to claim 1, comprising the cross-linked ethylene-vinyl acetate copolymer in an amount of 3 parts by mass to 40 parts by mass relative to 100 parts by mass of the rubber component.

3. The shoe sole (5a, 51b, 52b) according to claim 1 or 2, further comprising silica in an amount of more than 0 parts by mass to not more than 40 parts by mass relative to 100 parts by mass of the rubber component.

4. The shoe sole (5a, 51b, 52b) according to claim 1 or 2, further comprising silica in an amount of 10 parts by mass to 40 parts by mass relative to 100 parts by mass of the rubber component.

5. The shoe sole (5a, 51b, 52b) according to any one of claims 1 to 4, wherein the rubber component is composed of the natural rubber alone, the isoprene rubber alone, or a mixture of the natural rubber and the isoprene rubber.

6. The shoe sole (5a, 51b, 52b) according to any one of claims 1 to 5, wherein the cross-linked ethylene-vinyl acetate copolymer is a pulverized waste material.

7. The shoe sole (5a, 51b, 52b) according to any one of claims 1 to 6, which is used as an outsole (5a, 51b, 52b).

8. A shoe (1a, 1b comprising the shoe sole (5a, 51b, 52b) according to any one of claims 1 to 7.

## Patentansprüche

1. Schuhsohle (5a, 51b, 52b), umfassend:
eine Gummikomponente, die mindestens eines von einem Naturkautschuk und einem Isoprenkautschuk enthält; und
ein vernetztes Harz,
wobei die Gummikomponente den mindestens einen von dem Naturkautschuk und dem Isoprenkautschuk in einer Menge von nicht weniger als 70 Massenteilen pro 100 Massenteilen der Gummikomponente enthält, und
das vernetzte Harz ein vernetztes Ethylen-Vinylacetat-Copolymer ist.

2. Schuhsohle (5a, 51b, 52b) nach Anspruch 1, umfassend das vernetzte Ethylen-Vinylacetat-Copolymer in einer Menge von 3 Massenteilen bis 40 Massenteilen relativ zu 100 Massenteilen der Gummikomponente.

3. Schuhsohle (5a, 51b, 52b) nach Anspruch 1 oder 2, ferner umfassend Silica in einer Menge von mehr als 0 Massenteilen bis nicht mehr als 40 Massenteilen relativ zu 100 Massenteilen der Gummikomponente.

4. Schuhsohle (5a, 51b, 52b) nach Anspruch 1 oder 2, ferner umfassend Silica in einer Menge von 10 Massenteilen bis 40 Massenteilen relativ zu 100 Massenteilen der Gummikomponente.

5. Schuhsohle (5a, 51b, 52b) nach einem der Ansprüche 1 bis 4, wobei die Gummikomponente aus dem Naturkautschuk allein, dem Isoprenkautschuk allein oder einer Mischung aus dem Naturkautschuk und dem Isoprenkautschuk besteht.

6. Schuhsohle (5a, 51b, 52b) nach einem der Ansprüche 1 bis 5, wobei das vernetzte Ethylen-Vinylacetat-Copolymer ein pulverisiertes Abfallmaterial ist.

7. Schuhsohle (5a, 51b, 52b) nach einem der Ansprüche 1 bis 6, die als eine Laufsohle (5a, 51b, 52b) verwendet wird.

8. Schuh (1a, 1b), umfassend die Schuhsohle (5a, 51b, 52b) nach einem der Ansprüche 1 bis 7.

## Revendications

1. Semelle de chaussure (5a, 51b, 52b) comprenant :
un constituant en caoutchouc contenant au moins un parmi un caoutchouc naturel et un caoutchouc d'isoprène ; et
une résine réticulée,
dans laquelle le constituant en caoutchouc contient l'au moins un parmi le caoutchouc naturel et le caoutchouc d'isoprène en une quantité de pas moins de 70 parties en masse pour 100 parties en masse du constituant en caoutchouc, et
la résine réticulée est un copolymère d'acétate de vinyle-éthylène réticulé.

2. Semelle de chaussure (5a, 51b, 52b) selon la revendication 1, comprenant le copolymère d'acétate de vinyle-éthylène réticulé en une quantité de 3 parties en masse à 40 parties en masse par rapport à 100 parties en masse du constituant en caoutchouc.

3. Semelle de chaussure (5a, 51b, 52b) selon la revendication 1 ou 2, comprenant en outre de la silice en une quantité de plus de 0 partie en masse à pas plus de 40 parties en masse par rapport à 100 parties en masse du constituant en caoutchouc.

4. Semelle de chaussure (5a, 51b, 52b) selon la revendication 1 ou 2, comprenant en outre de la silice en une quantité de 10 parties en masse à 40 parties en masse par rapport à 100 parties en masse du constituant en caoutchouc.

5. Semelle de chaussure (5a, 51b, 52b) selon l'une des revendications 1 à 4, dans laquelle le constituant en caoutchouc est composé du caoutchouc naturel seul, du caoutchouc d'isoprène seul, ou d'un mélange du caoutchouc naturel et du caoutchouc d'isoprène.

6. Semelle de chaussure (5a, 51b, 52b) selon l'une des revendications 1 à 5, dans laquelle le copolymère d'acétate de vinyle-éthylène réticulé est un matériau de rebut pulvérisé.

7. Semelle de chaussure (5a, 51b, 52b) selon l'une des revendications 1 à 6, qui sert de semelle d'usure (5a, 51b, 52b).

8. Chaussure (la, lb) comprenant la semelle de chaussure (5a, 51b, 52b) selon l'une des revendications 1 à 7.
